# EUROPEAN PATENT SPECIFICATION

(11) **EP 2 022 660 B1**
(45) Date of publication and mention of the grant of the patent: **25.07.2012**
(21) Application number: 08161071.9
(22) Date of filing: 24.07.2008
(51) Int. Cl.: B60K 37/00, B62D 25/14

(54) **An automative vehicle instrument panel system**
Automobilarmaturensystem
Système de panneau d'instrument de véhicule automobile

(30) Priority: 01.08.2007 US 832250
(43) Date of publication of application: 11.02.2009
(73) Proprietor: Ford Global Technologies, LLC, Dearborn, MI 48126 (US)
(72) Inventor: Mullen, Gary, Farmington, MI 48335 (US); Samluk, Mike, Ford Motor Company Limited, Dearborn, MI 48121 (US); Williams, Michael, Northville, MI 48167 (US); Slane, Brian, Flatrock, MI 48134 (US); Bharathan, Kalyanaraman, Canton, MI 48188 (US); Harley, Jim, Dearborn, MI 48121 (US); Grace, James, Dearborn Heights, MI 48127 (US); Bejin, Peter, Northville, MI 48167 (US)
(74) Representative: Messulam, Adam Clive

(56) References cited:
- EP-A- 1 334 864
- EP-A- 1 712 429
- WO-A-02/12030
- WO-A-2004/052675
- US-B1- 6 250 678

## Description

### Field of the invention

The invention relates to automotive vehicle instrument panel systems.

### Background of the invention

It is a disadvantage with known instrument panels that in order to produce a two-tone instrument panel, painting, special tooling, e.g., dual-shot and/or finish panels are required.

It is known to attach an instrument panel at the upper cowl area to stabilize the instrument panel under vehicle vibration modes but this is in many cases unsatisfactory and torsional and longitudinal vibrations of the instrument panel may still occur resulting in undesirable rattles or squeaks.

EP 1 334 864, which is believed to constitute the closest prior art to the present invention, discloses an instrument panel system for a vehicle comprising an upper substrate, and a lower substrate including a portion covered by the upper substrate.

US 6,250,678 discloses the use of a cross car beam assembly to support an instrument panel.

### Object of the invention

It is an object of the invention to provide an improved instrument panel system for a vehicle.

According to a first aspect of the invention there is provided an instrument panel system for a vehicle comprising an upper substate, and a lower substrate including a portion covered by the upper substrate, characterised in that a cross car beam assembly is provided for supporting the lower substrate, the lower substrate being mechanically attached to the cross car beam assembly, a first structural box section is formed by portions of the lower substrate, the beam assembly, the upper substrate, and a defroster nozzle assembly and a second structural box section is formed by portions of the lower substrate and the cross car beam assembly.

The lower substrate may have a plurality of castellations arranged such that the castellations and an adjacent portion of the upper substrate form a number of closed structural sections.

The lower substrate may have a corrugated portion having a plurality of corrugations defining the castellations and the upper substrate may be a cover configured to cover the corrugated portion of the substrate such that portions of two adjacent corrugations and a portion of the cover form a closed structural section.

The upper substrate may have a first colour and the lower substrate may have a second colour different than the first colour.

The upper substrate may have a first die draw and the lower substrate may have a second die draw different than the first die draw.

The upper substrate may have a first grain and the lower substrate may have a second grain different than the first grain.

### Brief description of the drawings

The invention will now be described further, by way of example, with reference to the accompanying drawings, in which :
Figure 1 is an isometric view of an instrument panel system in accordance with an embodiment of the invention;
Figure 2 is an exploded isometric view of the instrument panel system of Figure 1 and shows the instrument panel, cover, beam assembly, and defroster nozzle assembly;
Figure 3 is a side schematic view, in cross-section, of the instrument panel system of Figure 1 and shows the structural box formed by portions of the beam assembly, defroster nozzle, and instrument panel;
Figure 4 is a front view, in cross-section, of the instrument panel of Figure 2 taken along section line 4-4 of Figure 2 and shows undulations in a portion of the instrument panel;
Figure 5 is an enlarged view of a portion of a top of an undulation of Figure 4 and shows weld mounts in detail.
Figure 6 is a front view, in cross-section, of a portion of the instrument panel system of Figure 1 taken along section line 6-6 of Figure 1 and shows the undulations in a portion of the instrument panel and the cover forming structural boxes;
Figure 7 is a front schematic view, in cross-section, of a portion of the instrument panel system of Figure 1 and shows the instrument panel and beam assembly forming a structural box;
Figure 8a is a side schematic view of the cover of Figure 2 and shows the die draw of the cover;
Figure 8b is schematic view of a portion of the surface of the cover of Figure 2 and shows the grain of the surface of the cover of Figure 2;
Figure 9a is a side schematic view of the instrument panel of Figure 2 and shows the die draw of the instrument panel; and
Figure 9b is a schematic view of a portion of the surface of the instrument panel of Figure 2 and shows the grain of the surface of the instrument panel of Figure 2.

### Detailed description of the preferred embodiment(s)

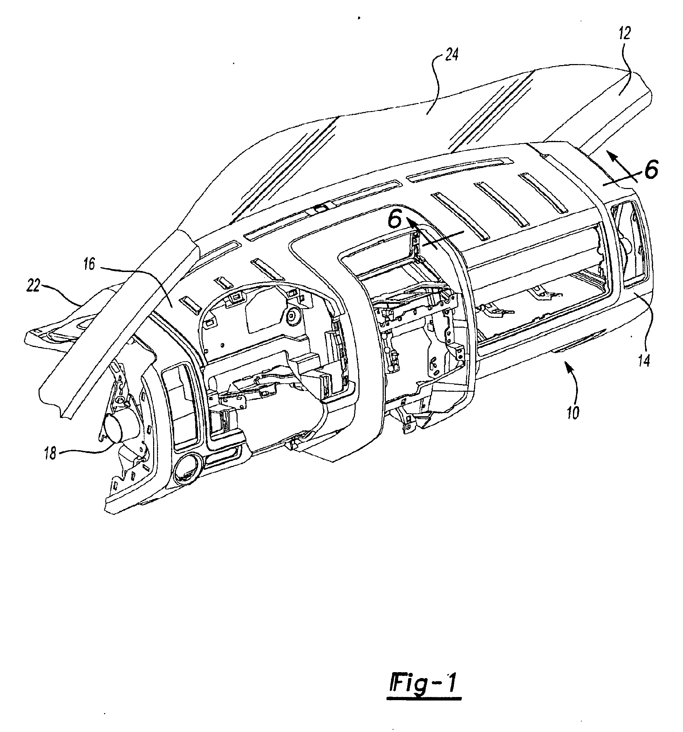

Referring now to Figures 1 to 7 there is shown a two piece instrument panel having an upper substrate in the form of an instrument panel cover hereinafter cover 16 and a lower substrate in the form of an instrument panel body member hereinafter instrument panel 14

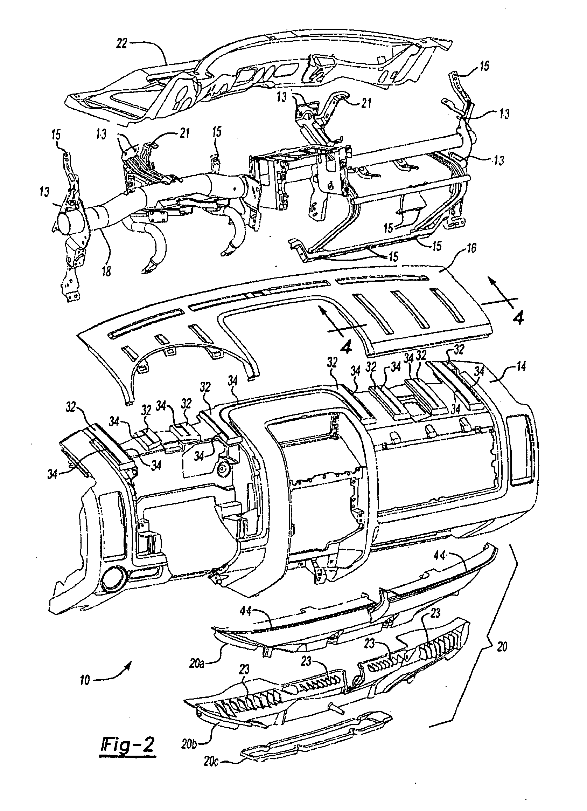

With particular reference to Figure 2 there is shown an exploded isometric view of an instrument panel system 10 shown in Figure 1. The instrument panel system 10 includes the instrument panel 14, the cover 16, a beam assembly 18 and defroster nozzle assembly 20.

The instrument panel 14 and cover 16 are each one-piece, moulded in colour, Thermal Plastic Olefin (TPO) injection mouldings.

The beam assembly 18 is constructed as a multi-piece component using AISI 1008 1010 cold rolled steel, the various components of which are MIG welded together. The beam assembly 18 includes a central tube from which a number of brackets extend radially outwardly to support the instrument panel 14 and the cover 16 and mount with a cowl 22 forming part of a body structure of a vehicle 12. It will be appreciated that the central tube could be formed as an extruded member to which a number of brackets are welded and could be made from an aluminium alloy rather than steel.

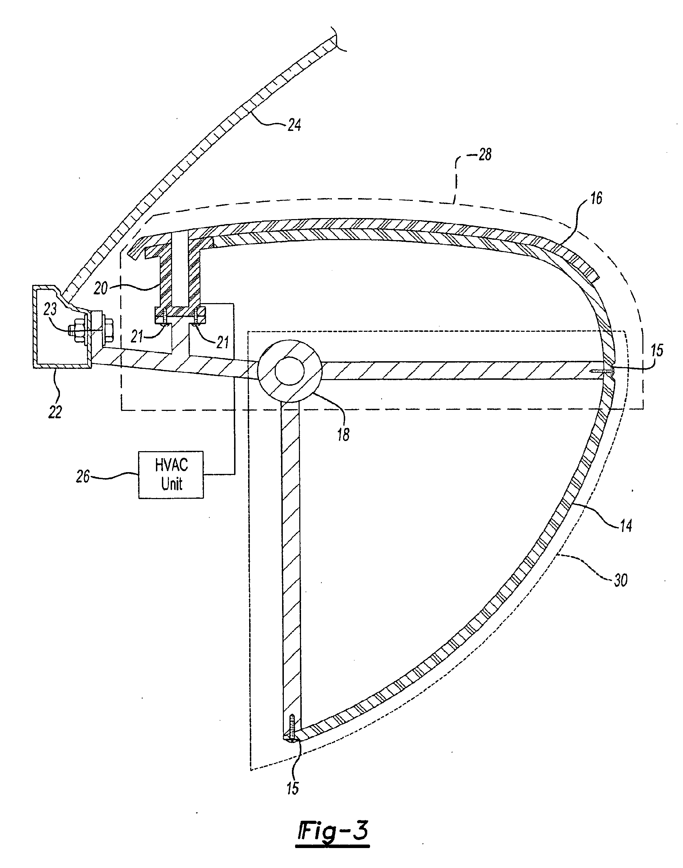

The defroster nozzle assembly includes upper section 20a, middle section 20b and lower section 20c. The upper and middle sections 20a, 20b are polypropylene injection mouldings that are welded, e.g., heat staked, together. The lower section 20c is a self adhered polyester foam that seals with heating, ventilation, air conditioning (HVAC) unit 26 (Figure 3). Middle section 20b includes baffles 23 to direct air from HVAC unit 26 (Figure 3) to windshield 24 (Figure 3.) Defroster nozzle assembly 20 screws to beam assembly 18 and is welded to cover 16 at welding ribs 44.

The cowl 22 is a one-piece stamping of AISI 1008 1010 cold rolled steel. Cowl 22 provides support for beam assembly 18 and as previously mentioned is part of the body structure of vehicle 12. In alternative embodiments, instrument panel 14, cover 16, beam assembly 18 and defroster nozzle assembly 20 could be manufactured and assembled in another suitable fashion.

Figure 3 is a side schematic view, in cross-section, of the instrument panel system of Figure 1. As explained below, instrument panel 14 is attached, e.g., ultrasonically bonded, vibration welded, heat staked, chemically adhered, with cover 16. Beam assembly 18 is mechanically attached, e.g., screwed or bolted to instrument panel 14 and cowl 22 at points 15, 13 respectively. Defroster nozzle assembly 20 is fixed, e.g., screwed, bonded, with cover 16 and mechanically attached, e.g., screwed, with beam assembly 18 at points 21. Windshield 24 rests within cowl 22.

A first structural box section 28 is formed by portions of instrument panel 14, beam assembly 18 and defroster nozzle assembly 20 along with the cover 16 which connects the instrument panel 14 to the defroster nozzle assembly 20. The first structural box section 28 increases the stiffness, rigidity, and natural frequency of instrument panel system 10 such that it resists deformation, torsion, and vibration.

A second structural box section 30 is formed by a lower portion of the instrument panel 14 and portions of the beam assembly 18. The second structural box section 30, like the first structural box section 28, increases the stiffness, rigidity, and natural frequency of instrument panel system 10 such that it resists deformation, torsion, and vibration.

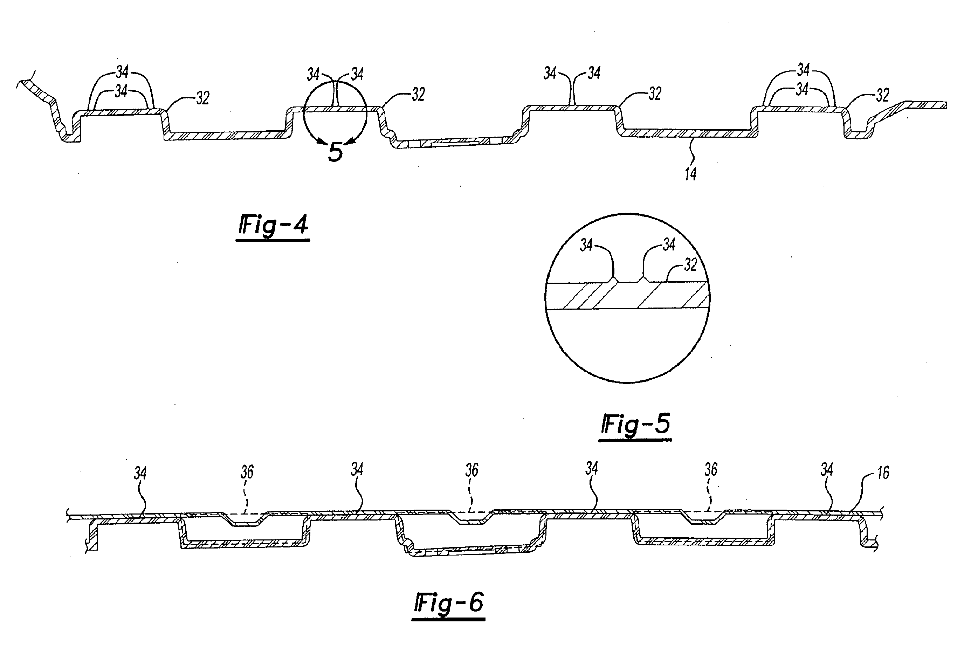

Figure 4 is a front view, in cross-section, of the instrument panel of Figure 2 taken along section line 4-4 of Figure 2. Castellations or corrugations 32 are formed across portions of instrument panel 14. Top mounts 34 provide material that upon, for example, ultrasonic welding with cover 16, bond with the cover 16 so as to join the two parts together.

Figure 5 is an enlarged view of a portion of a top of a castellation/undulation of Figure 4 and shows weld mounts in detail. In this case the mounts 34 are triangular in shape but it will be appreciated that in alternative embodiments the mounts 34 may take any other suitable form.

Figure 6 is a front view, in cross-section, of a portion of the instrument panel system of Figure 1 taken along section line 6-6 of Figure 1. Cover 16 is fastened/bonded, e.g., ultrasonically bonded, vibration welded, heat staked, chemically adhered, etc., with the tops of undulations 32 via mounts 34.

A number of structural box sections 36 are formed by the castellations/ corrugations 34 and portions of cover 16 to which the castellations 32 is fastened. The structural box sections 36, like the first and second structural box sections 28, 30, increase the stiffness, rigidity, and natural frequency of instrument panel system 10 such that it resists deformation, torsion, and vibration.

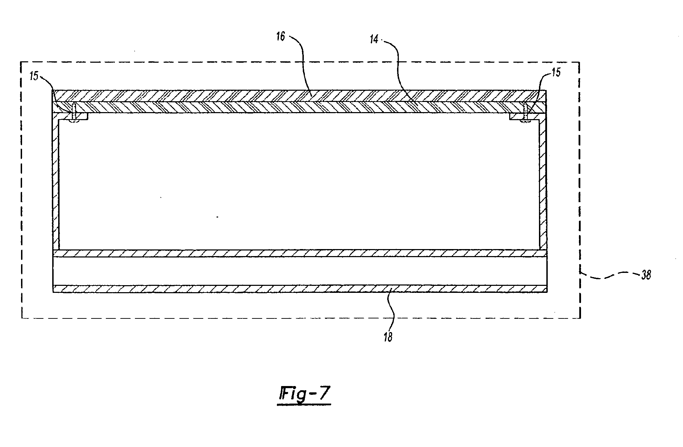

Figure 7 is a front schematic view, in cross-section, of a portion of the instrument panel system of Figure 1. Instrument panel 14 is mechanically connected, e.g., bolted, screwed, with beam assembly 18. A further structural section 38 is formed by instrument panel 14 and beam assembly 18. The structural section 38, like structural box sections 28, 30, 36, increase the stiffness, rigidity and natural frequency of instrument panel system 10 such that it resists deformation, torsion, and vibration.

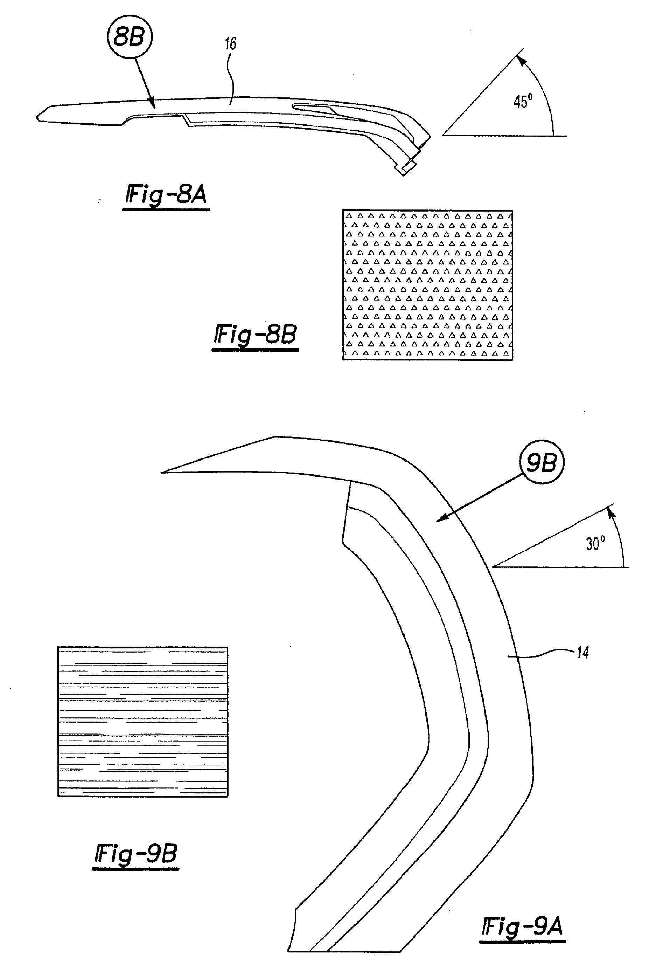

Figure 8a is a side schematic view of the cover of Figure 2. The die draw of cover 16 is shown.

Figure 8b is schematic view of a portion of the surface of the cover of Figure 2. The grain of cover 16 is shown.

Figure 9a is a side schematic view of the instrument panel of Figure 2. The die draw of instrument panel 14 is shown. The die draw of instrument panel 14 is different than the die draw of cover 16.

Figure 9b is a schematic view of a portion of the surface of the instrument panel of Figure 2. The grain of instrument panel 14 is shown. The grain of instrument panel 14 is different than the grain of cover 16.

Therefore in summary, embodiments of the invention may provide a two-piece instrument panel welded together. A forward edge of the instrument panel may be supported by a ventilation/ defroster duct. The duct may be supported by a cross car beam or other structural subsystem.

Embodiments of the invention may provide a two-tone instrument panel, allow a clam-shell design, which may increase the stiffness and thus natural frequency of the instrument panel, allow differing die draws on the top and rearward surfaces of the instrument panel, which may eliminate parting lines on any Class A surfaces, eliminate the need for cowl top attachments, which may eliminate small finish panels to cover any fasteners, and reduce squeak and rattle.

## Claims

1. An instrument panel system (10) for a vehicle (12) comprising
an upper substrate (16), and
a lower substrate (14) including a portion covered by the upper substrate (16),
**characterised by** further comprising
a cross car beam assembly (18) for supporting the lower substrate (14), the lower substrate (14) being mechanically attached to the cross car beam assembly (18),
a first structural box section (28) formed by portions of the lower substrate (14), the beam assembly (18) the upper substrate (16), and a defroster nozzle assembly (20) and
a second structural box section (30) formed by portions of the lower substrate (14) and the cross car beam assembly (18).

2. A system as claimed in claim 1 wherein the lower substrate has a plurality of castellations (32) arranged such that the castellations (32) and an adjacent portion of the upper substrate (16) form a number of closed structural sections (36).

3. A system as claimed in claim 2, wherein each of the plurality of castellations (32) has a top mount (34) and the upper substrate (16) is attached to the lower substrate (14) via the top mounts (34).

4. A system as claimed in claim 3, wherein the upper substrate (16) is one of ultrasonically bonded, vibration welded, heat staked and chemically adhered with each of the top mounts.

5. A system as claimed in any preceding claim,
wherein the upper substrate (16) has a first colour and the lower substrate (14) has a second colour different than the first colour.

6. A system as claimed in any of claims 1 to 5,
wherein the upper substrate (16) has a first die draw and the lower substrate (16) has a second die draw different than the first die draw.

7. A system as claimed in any of claims 1 to 5
wherein the upper substrate (16) has a first grain and the lower substrate (14) has a second grain different than the first grain.

8. A vehicle (12) including a body structure (22) for supporting an instrument panel system (10), a climate control unit (26) and a windshield (24) **characterised in that** the instrument panel system is an instrument panel system (10) as claimed in any of claims 1 to 7.

9. A vehicle as claimed in claim 9 wherein the cross car beam assembly (20) is mechanically attached by at least one of bolts and screws to the body structure (22).

## Patentansprüche

1. Ein Armaturenbrettsystem (10) für ein Fahrzeug (12), bestehend aus
einem oberen Trägermaterial (16) und
einem unteren Trägermaterial (14), das einen Abschnitt beinhaltet, der vom oberen Trägermaterial (16) bedeckt ist,
**dadurch gekennzeichnet, dass** es überdies Folgendes umfasst:
eine Armaturenträger-Anordnung (18), um das untere Trägermaterial (14) zu tragen, wobei das untere Trägermaterial (14) mechanisch an der Armaturenträger-Anordnung (18) befestigt ist,
ein erster struktureller Kasten (28), der durch Abschnitte des unteren Trägermaterials (14), der Armaturenträger-Anordnung (18), des oberen Trägermaterials (16) und einer Entfrosterdüsen-Anordnung (20) gebildet wird, sowie
ein zweiter struktureller Kasten (30), der durch Abschnitte des unteren Trägermaterials (14) und der Armaturenträger-Anordnung (18) gebildet wird.

2. Ein System, wie in Anspruch 1 beansprucht, worin das untere Trägermaterial eine Vielzahl von Verzahnungen (32) aufweist, die so angeordnet sind, dass die Verzahnungen (32) und ein angrenzender Abschnitt des oberen Trägermaterials (16) eine Reihe von geschlossenen strukturellen Abschnitten (36) bilden.

3. Ein System, wie in Anspruch 2 beansprucht, worin jede der Vielzahl von Verzahnungen (32) oben eine Halterung (34) aufweist und das obere Trägermaterial (16) über die oberen Halterungen (34) am unteren Trägermaterial (14) befestigt ist.

4. Ein System, wie in Anspruch 3 beansprucht, worin das obere Trägermaterial (16) entweder mit Ultraschall verschweißt, mittels Vibrationsschweißen verbunden, heißverprägt oder chemisch mit jeder oberen Halterung verbunden wird.

5. Ein System, wie in einem vorhergehenden Anspruch beansprucht, worin das obere Trägermaterial (16) eine erste Farbe und das untere Trägermaterial (14) eine zweite Farbe, die sich von der ersten Farbe unterscheidet, aufweist

6. Ein System, wie in einem der Ansprüche 1 bis 5 beansprucht, worin das obere Trägermaterial (16) einen erste Ausformschräge und das untere Trägermaterial (14) eine zweite Ausformschräge, der sich von der ersten Ausformschräge unterscheidet, aufweist.

7. Ein System, wie in einem der Ansprüche 1 bis 5 beansprucht, worin das obere Trägermaterial (16) eine erste Körnung und das untere Substrat (14) eine zweite Körnung, die sich von der ersten Körnung unterscheidet, aufweist.

8. Ein Fahrzeug (12), einschließlich einer Karosseriestruktur (22) zur Abstützung eines Armaturenbrettsystems (10), einer Klimaanalage (26) und einer Windschutzscheibe (24), **dadurch gekennzeichnet, dass** es sich beim Armaturenbrettsystem um ein Armaturenbrettsystem (10), wie in einem der Ansprüche1 bis 7 beansprucht, handelt.

9. Ein Fahrzeug, wie in Anspruch 8 beansprucht, worin die Armaturenträger-Anordnung (20) mechanisch zumindest entweder über Bolzen oder über Schrauben an der Karosseriestruktur (22) befestigt ist.

## Revendications

1. Un système de tableau de bord (10) pour un véhicule (12) comprenant
un substrat supérieur (16), et
un substrat inférieur (14) comprenant une partie couverte par le substrat supérieur (16),
**caractérisé en ce qu'**il comprend en outre
un ensemble barre transversale (18) destiné à soutenir le substrat inférieur (14), le substrat inférieur (14) étant mécaniquement fixé à l'ensemble barre transversale (18),
une première section structurelle en caisson (28) formée par des parties du substrat inférieur (14), l'ensemble barre (18), le substrat supérieur (16) et un ensemble buse de dégivrage (20), et
une deuxième section structurelle en caisson (30) formée par des parties du substrat inférieur (14) et l'ensemble barre transversale (18).

2. Un système selon la Revendication 1, où le substrat inférieur possède une pluralité de crénelures (32) agencées de sorte que les crénelures (32) et une partie adjacente du substrat supérieur (16) forment un nombre de sections structurelles fermées (36)

3. Un système selon la Revendication 2, où chaque crénelure de la pluralité de crénelures (32) possède un support supérieur (34) et le substrat supérieur (16) est fixé au substrat inférieur (14) par l'intermédiaire des supports supérieurs (34).

4. Un système selon la Revendication 3, où le substrat supérieur (16) est d'un type parmi lié par ultrasons, soudé par vibrations, empilé thermiquement et collé chimiquement à chacun des supports supérieurs.

5. Un système selon l'une quelconque des Revendications précédentes, où le substrat supérieur (16) possède une première couleur et le substrat inférieur (14) possède une deuxième couleur différente de la première couleur.

6. Un système selon l'une quelconque des Revendications 1 à 5, où le substrat supérieur (16) possède une première filière et le substrat inférieur (14) possède une deuxième filière différente de la première filière.

7. Un système selon l'une quelconque des Revendications 1 à 5 où le substrat supérieur (16) possède un premier grain et le substrat inférieur (14) possède un deuxième grain différent du premier grain

8. Un véhicule (12) comprenant une structure de carrosserie (22) destiné à soutenir un système de tableau de bord (10), une unité de régulation de la climatisation (26) et un pare-brise (24), **caractérisé en ce que** le système de tableau de bord est un système de tableau de bord (10) selon l'une quelconque des Revendications 1 à 7.

9. Un véhicule selon la Revendication 8 où l'ensemble barre transversale (20) est mécaniquement fixé par au moins un élément parmi boulons et vis à la structure de carrosserie (22).
